# EUROPEAN PATENT APPLICATION

(11) **EP 4 661 255 A1**
(43) Date of publication of application: **10.12.2025**
(21) Application number: 24275066.9
(22) Date of filing: 04.06.2024
(51) Int. Cl.: H02K 3/24, H02K 3/32, H02K 3/52

(54) **SLOT LINER FOR ELECTRIC MACHINE**

(71) Applicant: Goodrich Controls Holding Limited, Solihull West Midlands B90 4SS (GB)
(72) Inventor: PAGE, Andrew Edward, Tring HP23 4QD (GB)
(74) Representative: Dehns

(57) **Abstract**

A slot liner for an electric machine, arranged to be located and removably retained in a slot (2') of a machine to secure a winding (3') in the slot, whereby the slot liner comprises a flexible electrically non-conductive material defining a body (100) having a first surface to be located against a wall of the slot and an opposing surface (12) configured to receive a winding therearound, the slot liner further comprising a phase separator arm (23) extending adjacent but spaced from the opposing surface (12), the opposing surface and the phase separator arm (23) defining a space therebetween to accommodate a winding when mounted onto the slot liner (10), such that, in use, the separator arm (23) extends along the slot to separate a winding mounted on the slot liner from another winding secured in the slot by a slot liner on an adjacent tooth.

## Description

### TECHNICAL FIELD

The present disclosure is concerned with electrical machines and, in particular, slot liners for electrical machines.

### BACKGROUND

Rotary electric machines are used in many fields to generate mechanical or electrical energy. Such machines are used, for example, in industrial applications, automotive and aerospace applications.

A typical rotary electrical machine comprises a rotor and a stator, the rotor mounted to rotate relative to the stationary stator. Depending on the machine design, the stator or the rotor comprises a body have a plurality of teeth around its circumference, defining slots between the teeth. Coils of conductive e.g. copper wire, such as round, square. hairpin or Litz wires, form windings wound around the teeth and extending within the slots. Conventionally, the rotor is mounted around the stator core. In other machines, the stator is mounted outside the rotor. The design and operation of such machines is well known in the art and will not be described further.

Slot liners may be provided within the stator or rotor slots to electrically isolate the conductive windings from the core. Slots liners are typically made of a thin electrically insulating paper-type material to fit between the slot wall and the winding without taking up too much space in the slot.

In electric machines, particularly the more high power machines such as those used in aircraft, one of the main problems to be addressed in designing the machine is the large amount of heat generated at the machine windings. One approach to dealing with this problem is to consider designs that might generate less heat. Another approach is to consider designs that effectively dissipate the heat that is generated.

Direct and indirect cooling solutions have been proposed. Indirect cooling involves providing some form of heat sink or cooling plate to dissipate the heat in the machine to e.g. air or a coolant fluid. Another solution is the provision of a coolant such as a coolant fluid or cold air that is injected to flow across the surfaces to be cooled.

In designing machines, there is often a need or desire to minimise the size or weight of the machine without compromising power and performance. This often means aiming to create windings with as much of the conductive wire in the machine slots as possible. Litz wire configurations, in particular, fill a large part of the slot volume. There is, however, a conflict between this objective and the need to ensure effective cooling. For effective cooling, it is desirable to have as much of the winding surfaces as possible in contact with the coolant. However, the more tightly packed the conductive wires are in the slots, the less space there is for the coolant and less of the windings surface will come into contact with the coolant.

Furthermore, the closer the windings, the greater the risk of arcing or short circuits between different phases within a same slot.

Another consideration for machine design is that the windings should, ideally, stay in a fixed position within the slots. Materials such as copper, however, tend to deform or move as they heat up, which can also affect the performance of the machine.

There is a desire for an improved slot liner that allows for improved cooling and securing of the windings in place in the slots.

### SUMMARY

According to one aspect of the disclosure, there is provided a slot liner for an electric machine, arranged to be located and removably retained in a slot of a machine to secure a winding in the slot, whereby the slot liner comprises a flexible electrically non-conductive material defining a first surface to be located against a wall of the slot and an opposing surface configured to receive a winding therearound, the slot liner further comprising a phase separator arm extending adjacent but spaced from the opposing surface, the opposing surface and the phase separator arm defining a space therebetween to accommodate a winding when mounted onto the slot liner, such that, in use, the separator arm extends along the slot to separate a winding mounted on the slot liner from another winding secured in the slot by a slot liner on an adjacent tooth.

The opposing surface may have one or more surface features extending into the slot, when in position, such that when a winding is formed on the slot liner, turns of the winding are spaced from other turns of the winding by the surface features. The surface features are intended to separate the turns of the windings into bundles to provide a greater surface are of the windings available to be contacted by coolant. The number of turns the windings will have will depend on the size and purpose of the machine. Even a single separator surface feature will provide beneficial cooling effects, but the number of separating surface features can vary. The surface features also serve to secure the windings in place and better keep them in the desired position in the slot.

While the slot liner can be made of any relatively flexible, electrically insulative material, it is preferably a material such as plastic that can keep its shape and can be manufactured easily and at low cost.

For additional securing properties, the slot liner can be provided with a retention means such as a retaining lug arranged to cooperate with a corresponding means e.g. a groove provided on the machine.

The slot liner is preferably arranged to be fitted over a tooth of a machine stator so as to extend into the adjacent slot. A retaining lug or hook or the like can therefore be formed to slot into a corresponding groove or opening in the tooth.

In an embodiment, the slot liner may also be provided with means for holding a temperature sensor in or close to the slot. This may be in the form of a clip or sleeve or some other form of holder.

The slot liner may be formed as a unit together with the windings already provided thereon so that the liner and integral windings can be easily and quickly fitted into the machine slot and can be easily removed for repair or replacement if needed.

According to another aspect, there is provided a method of manufacturing a slot liner for an electric machine.

The method may also include forming a retaining structure on the slot liner body for retaining the liner in the slot.

The method may also include forming a holder for a temperature sensor on the slot liner body.

The method may further include winding a conductor for the machine over the slot liner.

According to another aspect, there is provided a method of mounting a winding into a slot of an electric machine.

### BRIEF DESCRIPTION OF THE DRAWINGS

Preferred embodiments will now be described by way of example only with reference to the drawings. The examples are described in the context of a stator slot liner but the disclosure could equally apply to a rotor slot liner.
Figure 1 shows a view of a partial stator structure with a conventional slot liner.
Figure 2 shows a section of a stator structure with a conventional slot liner
Figure 3 is a side view of a slot liner according to the present disclosure.
Figure 4 shows a perspective view of a slot liner such as shown in Fig. 3.
Figure 5 shows a perspective view of winding mounted on a slot liner such as shown in Fig. 4.
Figure 6 is a section view of windings mounted on slot liners on a wound stator.

### DETAILED DESCRIPTION

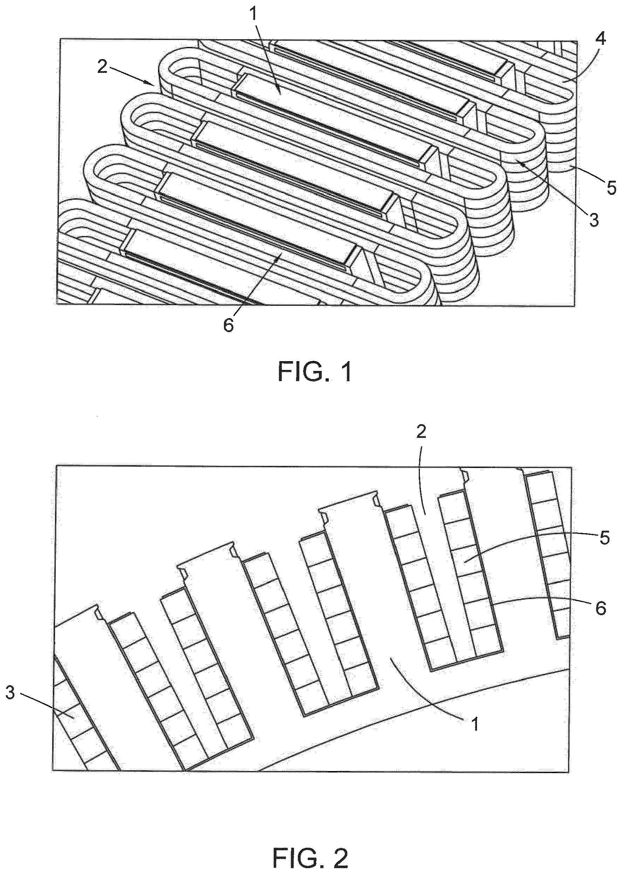

Figures 1 and 2 show a typical assembly for stator windings. The example shown here is for an outer rotor machine but the principles of the disclosure can also apply to inner rotor machines. Litz wires are currently preferred in many machines but other standard conductive wires can be used for the windings. The example described uses direct cooling and improves the efficiency of that cooling due to the slot liner structure. The slot liner will, however, also provide advantages in terms of cooling and also in terms of retaining the windings in place, even for indirectly cooled machines.

In the simplified model shown in Fig. 1, the stator has a plurality of teeth 1 around the circumference of the stator body. Slots 2 are defined between the teeth. Conductive windings 3 are wound around the teeth extending into the slots 2 with end windings 4 extending beyond the slots. Each winding has a number of turns 5. In the example shown, the winding may be a concentrated type i.e. each tooth only has a single phase wound onto it and adjacent teeth will have windings of different phases. For example, a first phase may be wound around a first tooth, a second phase around an adjacent, second tooth and so on for e.g. six teeth/six phases after which the sequence may be repeated. Alternatively, the phases may be interleaved with three phases wound on each of two sets of three teeth. This is known in the art and will not be described further. Each slot will, therefore, have, on opposite sides, windings of two different phases.

As can be seen, in order to fit as much conductor as possible in the slots, the wires are wound tightly around each tooth 1. This can, however, increase the risk of arcing/short circuiting.

Although not shown here, for simplicity, the teeth would usually be provided with a flange or wedge to retain the coil on the tooth and a sleeve would be provided around the structure to retain any fluid flowing through the stator. A coolant would flow through the structure to cool the windings in the slots.

A thin, non-conductive slot liner 6 may be provided between each tooth and the winding wound thereon, to provide electric insulation between the stator core and the winding.

The slot liner 6 can be seen more clearly in the sectional view of Fig. 2. Conventionally, this is a type of dielectric paper that is shaped as a liner and fitted into the slots 2. The windings 3 are then wound around the teeth and the slot liner.

The fitting of the liner and the winding process is difficult and time consuming and the liners and windings can be easily displaced during assembly. Further, as mentioned above, there is little space in the slot for coolant to effectively flow across the winding surfaces to provide effective cooling and there is little space for temperature sensors to be mounted into the slots without impeding fluid flow. As mentioned above, as each slot contains, on opposite sides, different phase windings, arcing or short circuits may occur across the slot.

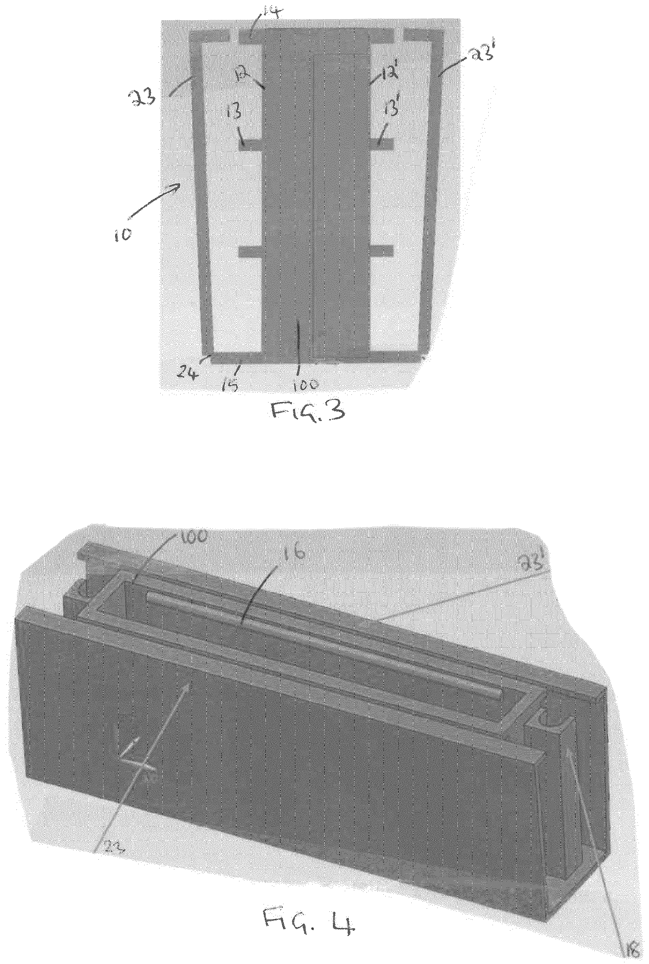

A slot liner 10 according to the present disclosure is shown in Fig. 3. Here, the slot liner may be made of a material that has some degree of rigidity to keep its shape whilst still being flexible enough to bend to fit over the teeth and to be retained in position. A dielectric plastic material is one suitable material for the slot liner.

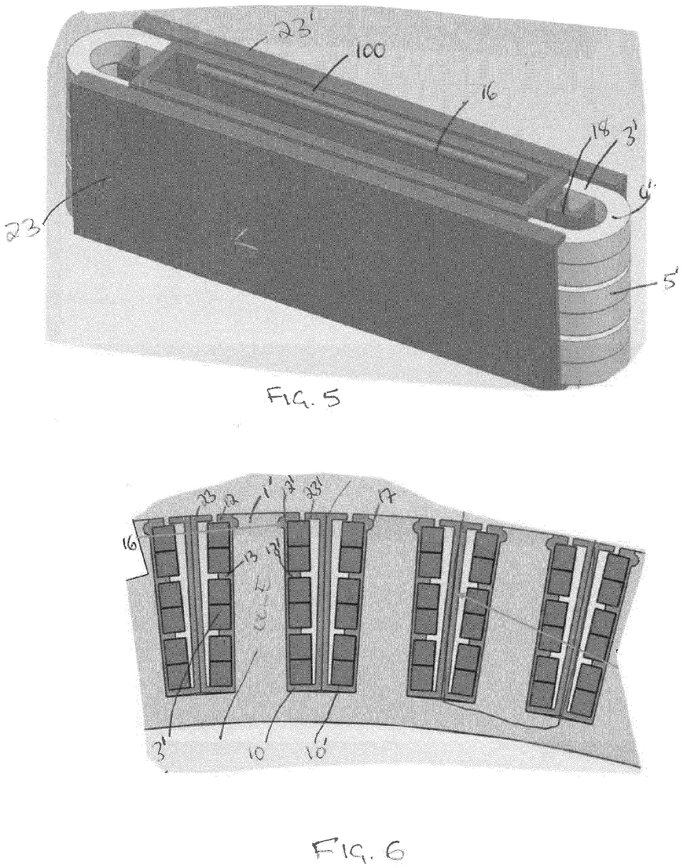

In the example shown, the slot liner 10 comprises a box-type body 100 shaped and sized to fit over a tooth of the machine in which it is to be installed such that the interior forms a close fit around the tooth. In its most basic form, not shown here, the slot liner of the disclosure could just comprise one wall of the structure so as to fit against one side of the tooth. Retention of the slot liner and, hence the winding, is, however, improved by a structure as shown here, arranged to fit over a tooth and extend on both sides of the tooth so as to form a liner on one wall of each adjacent slot (best seen in Fig. 5 of Fig. 6).

On the outer surface 12 of the box-type body 100 of the slot liner 10 that will, in use, face into the slot, surface features 13 may be formed. In the example shown in Fig. 2, the opposite outer side 12' of the liner structure would also be provided with similar surface features 13' that would extend into an adjacent slot on the other side of the tooth over which the liner is fitted.

In the example, the surface features may be ridges 13, 13' extending from the outer surface and two such ridges are shown. Of course, the features can have various shapes and dimensions and one or much such features may be provided. The surface features 13, 13' may serve to separate turns of the windings as described further below and also to secure the winding in place in the slot.

Optionally, a lip or flange 14,15 at both the top and bottom of the slot liner may be provided to further secure the winding in place.

The slot liner 10 further includes a phase separator arm 23, 23' extending spaced from and substantially along the length of the body 100 such that a space is defined between the phase separator arm and the outer surface 12 of the box-type body 100. In the example of Figs. 3 to 5, where the box-type body is arranged to fit over the entire tooth, a phase separator arm 23, 23' extends along both sides of the liner spaced from a respective outer surface 12, 12'. In other examples, though, the liner could just be one half of the liner shown in Fig. 3, with one half of the box-type body, one outer surface 12 with, where preferred, features 13, and one spaced phase separator arm 23. The spaced defined between the outer surface 12, 12' and the respective phase separator arm 23, 23' is configured to receive the winding, and the phase separator arm 23, 23 extends through the slot between its two sides, e.g. in the middle of the slot, when the liner is in place. When such liners are placed over adjacent slots, as seen in the example of Fig. 6, each slot will have a phase separator of each of the two liners providing separation between the windings on either side of that slot.

To simplify assembly of the windings and the slot liner, the windings may be first assembled around the body 100 of the slot liner 10 and the slot liner can then be fitted onto a tooth of the stator.

The phase separator arms 23, 23' may be attached to the bottom e.g. bottom flange 15 of the box-type body 100 by e.g. a notch 24 or line of weakness so that the arms 23, 23' can be slightly opened out away from the body 100 by pivoting about the notch/weakened portion to provide an opening via which the winding can be fitted onto the body 100. Once the winding is fitted, the arms can be 'closed' again relative to the body 100 to fit in the slot.

Optionally, a retaining device such as a lug 16 may be provided to secure the slot liner 10 to the tooth. Here a lug 16 is provided extending into the interior of the slot liner 10. This is provided with some degree of flexibility such that as the slot liner is fitted over the tooth, the lug can be retained in a corresponding groove 17 provided on the tooth. Other retaining mechanisms can also be envisaged.

Another optional feature shown here is a holder 18 for a temperature sensor. This can secure a temperature sensor in position sufficiently close to the winding in the slot to allow accurate temperature measurement. The shape and size of the holder will, of course, depend on the type of temperature sensor.

Fig. 5 shows the winding 3' wound onto the slot liner 10. The turns 5' are wound tightly around the slot liner 10. End wings 4' are also shown extending beyond the slot liner 10. As can be seen in Fig. 6, the surface features 13 may be provided to provide separation between some of the turns 5' of the winding. Here the separating surface features 13 may be arranged such that the winding turns are separated into three bundles of two. This is, of course, only an example and any number of bundles, with any number of turns can be formed. The winding may be further secured against sliding off the liner 10 by flanges 14 and 15. The optional temperature sensor holder 18 (here one on each end of the slot liner, although another option would be to just have one holder at one end) is located within the winding.

The phase separator arms 23, 23' extend across the outer surface of the windings 3' to provide separation between the winding and an adjacent winding in the same slot.

Figure 6 shows a plurality of slot liners 10 mounted onto a section of a stator. A slot liner 10 is fitted over each tooth 1' so as to line the slot walls defined by that tooth. As mentioned above, it would also be possible to have the slot liner configured just to line on wall but the example shown is preferred. Adjacent teeth have their own respective slot liner (here shown by 10 and 10'). A winding is wound around each slot liner such that, where present, the surface features 13 separate the turns 5' of the windings 3' into bundles as described above. The lip 15 fits at the bottom of the slot. The slot liner may be secured to the tooth by the retainer lug 16 that latches into the groove 17 on the tooth. The phase separator arm 23 extends along a middle portion of the slot to separate the winding on the slot liner from a winding on a slot liner on adjacent tooth extending into the same slot.

Ideally, the winding would be formed around the slot liner before the liner is mounted over the tooth as this simplifies assembly. The integral unit of slot liner and winding can then be easily and quickly pushed over the tooth and latched into place by the retainer lug. If a temperature sensor holder is provided, the temperature sensor can then be fitted into the holder (or this can be done before fitting the slot liner over the tooth.

To simplify assembly, the slot liner, as shown here, is open ended but it may, alternatively have a closed end. The liner may also be provided with additional flexibility by means of slits or a split surface or the like.

The arrangement described herein allows for improved coolant flow around the windings as well as improved securing of the slot liner and winding and simplified assembly. The addition of the temperature sensor holder allows temperature to be as accurately detected as possible.

## Claims

1. A slot liner for an electric machine, arranged to be located and removably retained in a slot (2') of a machine to secure a winding (3') in the slot, whereby the slot liner comprises a flexible electrically non-conductive material defining a body (100) having a first surface to be located against a wall of the slot and an opposing surface (12) configured to receive a winding therearound, the slot liner further comprising a phase separator arm (23) extending adjacent but spaced from the opposing surface (12), the opposing surface and the phase separator arm (23) defining a space therebetween to accommodate a winding when mounted onto the slot liner (10), such that, in use, the separator arm (23) extends along the slot to separate a winding mounted on the slot liner from another winding secured in the slot by a slot liner on an adjacent tooth.

2. The slot liner of claim 1, the body (100) being a box-type body configured to fit over a stator tooth, the body having two of said first surface, two of said opposing surface (12, 12') and two of said separator arm (23, 23').

3. The slot liner of claim 1 or 2, wherein the separator arm (23) is hingedly mounted to the body (100).

4. The slot liner of claim 3, wherein the separator arm is hingeldy mounted to the body (100) via a notch (24).

5. The slot liner as claimed in any preceding claim, the opposing surface (12) having one or more surface features (13) extending into the slot, when in position, such that when a winding is formed on the slot liner, turns of the winding are spaced from other turns of the winding by the surface features.

6. The slot liner of claim 5, wherein the one or more surface features (13) comprise one or more ridges.

7. The slot liner of any preceding claim, further comprising retention means (16) arranged to cooperate with a corresponding means provided on the machine.

8. The slot liner of any preceding claim, further comprising means for holding a temperature sensor.

9. The slot liner of any preceding claim, formed as a unit together with a winding of conductive material provided thereon.

10. The slot liner of any preceding claim made of flexible plastic.

11. A method of manufacturing a slot liner for an electric machine, comprising forming a body of flexible non-conductive material shaped to fit into the slot of an electric machine and to be positioned against a wall of the slot, and forming a phase separator arm attached to and extending spaced from the body configured to receive windings of conductive material in a space defined between the body and the separator arm.

12. The method of claim 11, further comprising forming one or more surface features (13) on the body to separate the windings into bundles.

13. The method of claim 11 or 12, further comprising forming a holder for a temperature sensor on the slot liner body.

14. The method of claim 11, 12 or 13, further comprising winding a conductor for the machine over the slot liner.

15. A method of mounting a winding into a slot of an electric machine, the method comprising mounting the winding onto a slot liner between a body and a phase separator arm of the slot liner to provide separation between the winding and an adjacent winding in a slot, and securing the winding in the machine slot.
